# FASCICULE DE BREVET EUROPEEN

(11) **EP 1 160 224 B1**
(45) Date de publication et mention de la délivrance du brevet: **20.08.2003**
(21) Numéro de dépôt: 00201660.8
(22) Date de dépôt: 09.05.2000
(51) Int. Cl.: C04B 41/87, C04B 35/486, G04B 37/22

(54) **Procédé d'obtention d'un article à base de zircone ayant un aspect métallique doré**
Verfahren zur Herstellung von Zirkonoxid-Körper mit einem metallisch-goldenen Aussehen
Process for producing a zirconia base article having a metallic golden aspect

(43) Date de publication de la demande: 05.12.2001
(73) Titulaire: ASULAB S.A., 2074 Marin (CH)
(72) Inventeur: Verdon, Christian, 1034 Boussens (CH)
(74) Mandataire: Ravenel, Thierry Gérard Louis

(56) Documents cités:
- EP-A- 0 739 865
- EP-A- 0 850 900
- EP-A- 0 947 490
- US-A- 5 672 302
- PATENT ABSTRACTS OF JAPAN vol. 2000, no. 02, 29 février 2000 (2000-02-29) & JP 11 314966 A (ASULAB SA), 16 novembre 1999 (1999-11-16)

## Description

La présente invention concerne un procédé d'obtention d'un article à base de zircone, notamment fritté, et en particulier d'un tel article dont la structure chimique est modifiée sur une partie de son épaisseur pour lui conférer une surface extérieure ayant un aspect métallique doré.

La demande de brevet EP 0 947 490 au nom de la demanderesse décrit notamment un procédé d'obtention d'un article en zircone ayant un aspect métallique doré. Selon ce procédé, on introduit un article en zircone stabilisée en phase tétragonale dans une enceinte dans laquelle on crée un plasma obtenu à partir d'un mélange gazeux d'ammoniac et d'un gaz neutre et l'on maintient l'article dans le plasma pendant un temps d'environ 15 à 240 minutes, en ajustant les conditions pour que la température moyenne de l'article s'établisse entre 600 et 1300°C.

Au cours du traitement, l'azote contenu dans le plasma diffuse dans la céramique en surface et transforme la phase tétragonale de la zircone en phase cubique. Ce phénomène a déjà été décrit dans une publication de MM. J. Wrba & L. Lerch dans le journal intitulé J. Euro-Ceram. Soc. 18, (1998) aux pages 1787 à 1793. Bien que cette transformation superficielle ne provoque aucune fissuration de la zircone dans la mesure où la phase cubique a la même masse volumique que la phase tétragonale, cette transformation entraîne une diminution de sa ténacité en surfacé. Comme une certaine quantité d'azote doit être incorporée dans la zircone pour former le nitrure de zirconium qui va donner l'aspect doré souhaité, on ne peut limiter l'effet nuisible de cette transformation structurale qu'en réduisant l'extension spatiale sur laquelle elle a lieu. Pour ce faire, il est nécessaire de limiter la diffusion de l'azote dans la zircone. En d'autre termes ceci équivaut pratiquement à diminuer la température de traitement par plasma, par exemple, dans le cas d'un réacteur à décharge, en diminuant la quantité relative d'hydrogène dans le plasma, en réduisant l'intensité de la décharge ou encore en éloignant les pièces du plasma. A titre illustratif, l'épaisseur modifiée passe typiquement de 300µm pour une température de traitement de 950°C à 10µm pour une température de traitement de 600°C.

Cette diminution de la température présente toutefois un inconvénient en ce que l'épaisseur des couches de nitrure de zirconium (ZrN) obtenues sont très minces et laissent apparaître l'oxyde de zirconium réduit (ZrO₂₋ₓ), ce qui nuit considérablement à l'éclat métallique doré que l'on souhaite obtenir et par conséquent rend quasiment impossible l'application de ces zircones transformées à des fins esthétiques et décoratives.

L'invention a pour but de remédier aux inconvénients de l'art antérieur en fournissant un procédé d'obtention d'un article en zircone permettant la formation de couches de ZrN sur une grande épaisseur, typiquement 300nm, présentant un aspect métallique doré intense, ainsi que de bonnes propriétés mécaniques.

A cet effet, l'invention a pour objet un procédé d'obtention d'un article fini ou semi-fini à base de zircone, l'article ayant un aspect extérieur métallique, caractérisé en ce qu'il comprend les étapes consistant à :
- se munir d'au moins un article en zircone préalablement conformé dans sa forme finie ou semi-finie;
- réduire partiellement la zircone formant ledit article,
- introduire ledit article dans une enceinte dans laquelle on crée un plasma à partir d'ammoniac, ou d'un mélange d'azote et d'hydrogène, ou encore d'une combinaison de ce gaz et de ce mélange, et
- maintenir ledit article dans le plasma pendant un temps d'au moins 5 minutes, en ajustant les conditions pour que la température moyenne de l'article s'établisse entre 500 et 900°C.

Le procédé de l'invention permet donc la formation d'une couche superficielle de nitrure de zirconium suffisamment épaisse tout en évitant la transformation de la zircone en phase cubique sur une trop grande épaisseur, et ce grâce à la combinaison de l'étape de réduction préalable et du traitement par plasma à relativement basse température (entre 500 et 900°C), ce dernier traitement étant permis par l'étape de réduction préalable.

Selon un mode de réalisation préféré de l'invention, on ajoute un gaz neutre à l'ammoniac, respectivement au mélange d'azote et d'hydrogène.

En effet, l'ajout d'un gaz neutre permet de déclencher un arc électrique à plus basse tension dans le réacteur à plasma, ce qui favorise l'amorce du plasma en régime continu, notamment dans le cas d'un réacteur à décharge.

Selon un mode de réalisation avantageux de l'invention, l'étape de réduction de préalable dudit article est réalisée dans un plasma d'hydrogène.

Ainsi, il est possible de réaliser l'étape préalable de réduction de la zircone dans le même réacteur que celui utilisé pour réaliser l'étape de nitruration ultérieure, ce qui simplifie grandement le procédé et diminue son coût.

Selon une autre caractéristique de l'invention, l'étape de réduction préalable dudit article est réalisée sous pression atmosphérique d'hydrogène à une température comprise entre 1100°C et 1300° pendant environ 1 à 2 heures.

D'autres caractéristiques et avantages de l'invention seront mieux compris à l'aide de la description suivante d'un exemple de mise en oeuvre du procédé d'obtention d'un article à base de zircone ayant un aspect extérieur métallique doré.

A titre d'exemple, on se munit d'un article de départ en zircone ayant une configuration cristallographique tétragonale (oxyde de zirconium ZrO₂) de couleur blanche et qui est réalisé selon les techniques usuelles de fabrication d'articles en céramique, par exemple par frittage.

Cet article peut être un produit fini ayant la forme finale dans laquelle il va être utilisé, par exemple une pièce ayant déjà subi un polissage miroir et destinée à constituer un élément de l'habillement d'une montre, par exemple un maillon de bracelet.

Bien entendu, le cas échéant, l'article peut être un produit semi-fini sur lequel des opérations d'usinage ultérieures pourront être réalisées afin d'adapter cet article à son utilisation finale.

Le procédé selon l'invention consiste tout d'abord à réduire partiellement la zircone formant l'article afin d'obtenir par réduction contrôlée un gradient d'état de réduction entre la surface de l'article et le coeur. Par réduction partielle, on comprend dans le cadre de la description que l'on crée une sous-stoechiométrie en oxygène de la zircone, soit un composé du type ZrO₂₋ₓ.

Cette étape de réduction partielle est de préférence réalisée à coeur de l'article. Cette étape est par exemple réalisée par un traitement prolongé de l'ordre de une à deux heures à une température comprise entre 1100°C et 1300°C, typiquement à 1200°C, et sous pression atmosphérique d'hydrogène. Il va de soi que tout autre moyen de réduction permettant une réduction à coeur de l'article peut être envisagé par l'homme de métier. La durée de l'étape de réduction dépendra bien entendu des dimensions et de la forme du ou des articles à traiter.

Cet article est ensuite introduit dans une enceinte dans laquelle on crée un plasma obtenu à partir de l'ionisation d'un mélange gazeux d'ammoniac et le cas échéant d'un gaz neutre, ou d'un mélange d'azote, d'hydrogène et le cas échéant d'un gaz neutre, ou encore d'une combinaison de ces deux mélanges. Ce plasma est obtenu par exemple à l'aide d'une décharge électrique. Bien entendu, selon des variantes du procédé de l'invention d'autre moyens pour engendrer le plasma peuvent être envisagés. A titre d'exemple, le plasma peut être obtenu par radiofréquences (RF) ou encore par micro-ondes.

Selon la méthode utilisée pour obtenir le plasma, l'utilisation de l'argon comme gaz neutre est avantageuse. Bien entendu, l'utilisation d'autres gaz neutres tel que le néon est envisageable.

L'article est maintenu dans le plasma pendant une durée d'au moins 5 minutes, et de préférence entre 15 et 240 minutes. La température moyenne de l'article au cours du traitement de ce dernier s'établit entre 500 et 900°C selon les paramètres de mise en oeuvre (temps, composition du mélange gazeux, débits, etc.) du procédé. On notera également à ce propos que dans le cas où l'énergie engendrée par le plasma n'est pas suffisante pour que l'article atteigne une température comprise entre 500 et 900°C, on utilisera des moyens de chauffage auxiliaires.

Après cette dernière opération, l'article présente l'éclat métallique doré du nitrure de zirconium, ainsi que sa conduction et sa très grande dureté superficielle, indispensable à l'obtention d'un article insensible à l'usure dans des conditions d'utilisation normales. On notera par ailleurs que cette transformation superficielle n'affecte pas de manière sensible la ténacité de la zircone transformée. La structure cristallographique de la zircone est donc transformée superficiellement en une nouvelle structure cristallographique correspondant à celle du nitrure de zirconium, et non d'un revêtement rapporté susceptible d'être arraché ou de se désolidariser de la surface de l'article, notamment lorsque celui-ci est soumis à des conditions d'usure importantes.

Un point essentiel du procédé de l'invention est la combinaison de l'étape de réduction par plasma de l'article avant le traitement par plasma ainsi que le traitement par plasma de l'article à relativement basse température. En effet, on a constaté que la formation d'une couche superficielle de ZrN ayant une épaisseur suffisante et l'obtention des propriétés optiques, physiques et mécaniques désirées dépendaient étroitement de l'état de réduction de la zircone en surface avant le traitement. Les couches de ZrN qui résultent de la nitruration à basse température d'une zircone stoechiométrique (ZrO2) sont donc, en l'absence d'une étape de réduction préalable, toujours de très faible épaisseur (quelques dizaines de nanomètres), ce qui laisse transparaître la couleur grise de la céramique sous-jacente partiellement réduite comme cela a déjà été mentionné plus haut. C'est pourquoi, conformément à l'invention, le procédé comprend une étape supplémentaire préalable à l'étape de nitruration, au cours de laquelle la zircone est réduite partiellement. L'étape de réduction préalable permet d'obtenir un gradient d'état de réduction qui permet à la couche de nitrure de zirconium de se former sur une plus grande épaisseur, par exemple sur une épaisseur de l'ordre de 300 nm. Une telle zircone présente alors la couleur et les propriétés de résistances mécaniques et en particulier une ténacité satisfaisante pour des articles tels que des articles décoratifs.

### Exemple 1 :

Plusieurs maillons de bracelets de montre, en zircone tétragonale (ZrO2) blanche, ayant une longueur de 20 mm, une largeur de 7 mm, et une épaisseur de 3 mm, sont placés dans une enceinte à plasma ayant un diamètre de 700 mm. La zircone utilisée est une zircone à 100% tétragonale, stabilisée à température ambiante par l'ajout d'oxyde d'yttrium (3% mol) et qui présente une ténacité typiquement supérieure à 5 MPa.m^{1/2}. On introduit un mélange de gaz comprenant 55% d'Argon (Ar) et 45% d'hydrogène dans l'enceinte. Le débit d'argon est de 1200 sccm et le débit d'hydrogène est de 1000 sccm. Le régime continu du courant de décharge est fixé à 200A sous 70V. Par ailleurs, la pression dans l'enceinte est fixée à 1 millibar. Un plasma est produit classiquement entre la cathode et l'anode se trouvant dans l'enceinte. L'hydrogène atomique vient alors en contact avec la surface des maillons et réduit ainsi partiellement la zircone. Au cours de cette étape du traitement des maillons, la température de ces derniers s'établit à environ 910°C. Le traitement dure une heure.

Un mélange de gaz comprenant 75 % d'argon (Ar) et 25% d'ammoniac (NH3) est introduit dans cette enceinte. Le débit d'argon est de 1200 sccm et le débit d'ammoniac est de 410 sccm. Le régime continu du courant de décharge est fixé à 80A sous 82V. Par ailleurs, la pression dans l'enceinte est fixée à 1 millibar. Un plasma est produit classiquement entre la cathode et l'anode se trouvant dans l'enceinte. Le mélange de gaz ionisé vient alors en contact avec la surface des maillons déjà partiellement réduite et l'azote atomique du plasma se substitue à l'oxygène de la zircone. L'hydrogène présent dans l'enceinte sert de catalyseur pour cette réaction et empêche la réoxydation de la zircone. Au cours du traitement des maillons, la température dans l'enceinte s'établit à environ 770°C. Le traitement dure 2 heures. Les maillons sont ensuite retirés de l'enceinte et soumis à des analyses. L'observation de coupes transversales de ces maillons au microscope électronique à transmission montrent qu'une partie de la surface des maillons a été transformée en nitrure de zirconium (ZrN) sur une profondeur d'environ 250 nm. La dureté des maillons traités a également été mesurée. Les valeurs de dureté Vickers obtenues sont de l'ordre de 12 GPa. Les maillons obtenus ont un aspect métallique doré très proche de celui de l'or. On notera également que l'épaisseur de transformation de la zircone en phase cubique après traitement est de l'ordre de 18µm, l'épaisseur de cette phase étant directement liée à la température de la céramique au cours du traitement.

### Exemple 2 :

Une boîte de montre en zircone tétragonale blanche est disposée comme décrit dans l'exemple 1 dans une enceinte à plasma. La boîte est de forme générale rectangulaire et présente une longueur de 30 mm, une largeur de 24 mm et une hauteur de 5 mm. Cette boîte est évidée en son centre. Le mode opératoire est identique à celui décrit dans l'exemple 1, à la différence que l'étape de réduction préalable de la zircone est réalisée dans un four à atmosphère contrôlée dans lequel circule une flux d'hydrogène de 100 sccm à 1200°C pendant deux heures et qu'au cours de l'étape de nitruration le mélange de gaz utilisé comprend 55 % d'azote, 34 % d'hydrogène et 11 % d'argon. Le débit d'argon est de 1200 sccm, le débit d'azote est de 250 sccm et le débit d'hydrogène de 750 sccm. Le régime continu du courant de décharge est fixé à 50A sous 90V. Dans cet exemple, la température dans l'enceinte s'établit à environ 670°C lors du traitement. Le traitement dure deux heures. Les boîtes de montre obtenues ont un aspect métallique doré similaire à celui des maillons décrits précédemment, et présentent les mêmes caractéristiques de transformation et de dureté que celles décrites dans l'exemple 1.

Il résulte de ce qui précède que le procédé selon l'invention permet de réaliser des articles, notamment décoratifs, d'aspect métallique doré, cumulant certaines des caractéristiques des céramiques et des métaux.

Il est ainsi possible d'obtenir des articles décoratifs présentant sensiblement les propriétés mécaniques de la zircone tétragonale et notamment sa ténacité, tout en présentant un aspect et un éclat métallique doré particulièrement esthétiques. Ces articles sont parfaitement adaptés à des utilisations en tant qu'articles décoratifs et en particulier en tant qu'éléments de construction de bracelets ou de boîtes pour pièces d'horlogerie.

## Revendications

1. Procédé d'obtention d'un article fini ou semi-fini à base de zircone, l'article ayant un aspect extérieur métallique doré, **caractérisé en ce qu'**il comprend les étapes consistant à :
- se munir d'au moins un article en zircone préalablement conformé dans sa forme finie ou semi-finie;
- réduire partiellement la zircone formant ledit article,
- disposer ledit article dans une enceinte dans laquelle on crée un plasma obtenu à partir d'ammoniac, ou d'un mélange d'azote et d'hydrogène, ou encore d'une combinaison de ce gaz et de ce mélange, et
- maintenir ledit article dans le plasma pendant un temps d'au moins 5 minutes, en ajustant les conditions pour que la température moyenne de l'article s'établisse entre 500 et 900°C.

2. Procédé selon la revendication 1, **caractérisé en ce que** l'on ajoute un gaz neutre à l'ammoniac, respectivement au mélange d'azote et d'hydrogène.

3. Procédé selon la revendication 1, **caractérisé en ce que** l'étape de réduction de préalable dudit article est réalisée dans un plasma d'hydrogène ou d'un mélange d'hydrogène et d'un gaz neutre.

4. Procédé selon la revendication 1,-**caractérisé en ce que** l'étape de réduction de préalable dudit article est réalisée en présence d'hydrogène à une température comprise entre 1100°C et 1300° pendant un temps compris entre 1 et 2 heures.

5. Procédé selon la revendication 1, **caractérisé en ce que** le gaz neutre est l'argon.

6. Procédé selon la revendication 1, **caractérisé en ce que** ledit plasma est engendré par une décharge de courant continu .

7. Procédé selon la revendication 1, **caractérisé en ce que** l'ajustement des conditions dudit plasma comprennent l'utilisation de moyens de chauffage auxiliaires.

8. Procédé selon la revendication 1, **caractérisé en ce que** l'étape de réduction partielle est réalisée pour réduire ledit article à coeur.

9. Procédé selon la revendication 1, **caractérisé en ce que** l'article est maintenu dans ledit plasma pendant un temps compris entre 15 et 240 minutes.

## Patentansprüche

1. Verfahren zum Erhalten eines fertigen oder halbfertigen Gegenstandes auf Zirkonoxidbasis, wobei der Gegenstand ein goldmetallisches äußeres Aussehen besitzt, **dadurch gekennzeichnet, daß** es die Schritte umfaßt, die darin bestehen:
- wenigstens einen Gegenstand aus Zirkonoxid vorzusehen, der im voraus seine fertige oder halbfertige Form erhalten hat;
- das den Gegenstand bildende Zirkonoxid teilweise zu reduzieren,
- den Gegenstand in einem Behälter anzuordnen, in dem ein Plasma erzeugt wird, das aus Ammoniak oder aus einem Gemisch aus Stickstoff und Wasserstoff oder aber aus einer Kombination dieses Gases mit diesem Gemisch erhalten wird, und
- diesen Gegenstand in dem Plasma während einer Zeit von wenigstens 5 Minuten zu halten, indem die Bedingungen so eingestellt werden, daß die mittlere Temperatur des Gegenstandes im Bereich von 500 bis 900 °C liegt.

2. Verfahren nach Anspruch 1, **dadurch gekennzeichnet, daß** zu Ammoniak bzw. zu dem Gemisch aus Stickstoff und Wasserstoff ein neutrales Gas hinzugefügt wird.

3. Verfahren nach Anspruch 1, **dadurch gekennzeichnet, daß** der Schritt des vorherigen Reduzierens des Gegenstandes in einem Plasma aus Wasserstoff oder aus einem Gemisch aus Wasserstoff und einem neutralen Gas ausgeführt wird.

4. Verfahren nach Anspruch 1, **dadurch gekennzeichnet, daß** der Schritt des vorherigen Reduzierens des Gegenstandes in Gegenwart von Wasserstoff bei einer Temperatur im Bereich von 1100 °C bis 1300 °C während einer Dauer im Bereich von 1 bis 2 Stunden ausgeführt wird.

5. Verfahren nach Anspruch 1, **dadurch gekennzeichnet, daß** das neutrale Gas Argon ist.

6. Verfahren nach Anspruch 1, **dadurch gekennzeichnet, daß** das Plasma durch eine Gleichstromentladung erzeugt wird.

7. Verfahren nach Anspruch 1, **dadurch gekennzeichnet, daß** die Einstellung der Bedingungen des Plasmas die Verwendung zusätzlicher Heizmittel umfaßt.

8. Verfahren nach Anspruch 1, **dadurch gekennzeichnet, daß** der Schritt des teilweisen Reduzierens ausgeführt wird, um den Gegenstand im Kern zu reduzieren.

9. Verfahren nach Anspruch 1, **dadurch gekennzeichnet, daß** der Gegenstand in dem Plasma während einer Dauer im Bereich von 15 bis 240 Minuten gehalten wird.

## Claims

1. Method for obtaining a finished or semi-finished zirconia-based article, the article having a gold metallic external appearance, **characterised in that** it includes the steps of:
- providing at least one zirconia article previously shaped into its finished or semi-finished shape;
- partially reducing the zirconia forming said article;
- placing said article in a reaction vessel in which a plasma is generated from ammonia; or a mixture of nitrogen and hydrogen, or a combination of this gas and this mixture; and
- maintaining said article in the plasma for a period of at least 5 minutes, while adjusting the conditions so that the average temperature of the article is settled between 500 and 900°C.

2. Method according to claim 1, **characterised in that** an inert gas is added to the ammonia, or respectively to the mixture of nitrogen and hydrogen.

3. Method according to claim 1, **characterised in that** the prior reduction step of said article is performed in a hydrogen plasma or a plasma of a mixture of hydrogen and an inert gas.

4. Method according to claim 1, **characterised in that** the prior reduction step of said article is performed in the presence of hydrogen at a temperature comprised between 1100°C and 1300°C for a period of time comprised between 1 and 2 hours.

5. Method according to claim 1, **characterised in that** the inert gas is argon.

6. Method according to claim 1, **characterised in that** said plasma is generated by a DC discharge.

7. Method according to claim 1, **characterised in that** the adjustment of the conditions of said plasma includes the use of auxiliary heating means.

8. Method according to claim 1, **characterised in that** the partial reduction step is performed to reduce said article up to the core.

9. Method according to claim 1, **characterised in that** the article is maintained in said plasma for a period of time comprised between 15 and 240 minutes.
